# FASCICULE DE BREVET EUROPEEN

(11) **EP 0 849 131 B1**
(45) Date de publication et mention de la délivrance du brevet: **24.10.2001**
(21) Numéro de dépôt: 97403036.3
(22) Date de dépôt: 15.12.1997
(51) Int. Cl.: B60R 21/26

(54) **Générateur tubulaire intégral de gaz par voie pyrotechnique, pour gonfler des coussins de protection**
Pyrotechnischer rohrförmiger integraler Gasgenerator für Airbags
Pyrotechnic tubular integral gas generator for airbags

(30) Priorité: 18.12.1996 FR 9615573
(43) Date de publication de la demande: 24.06.1998
(73) Titulaire: S.n.c. Livbag, 91710 Vert Le Petit (FR)
(72) Inventeur: Perotto, Christian, 91610 Ballancourt (FR); Duvacquier, Daniel, 33300 Bordeaux (FR); Marsaud, Benoît, 27830 Neaufles Saint Martin (FR)
(74) Mandataire: Pech, Bernard

(56) Documents cités:
- EP-A- 0 686 530
- WO-A-90/05651
- DE-A- 4 227 547

## Description

La présente invention se rapporte au domaine de la protection, en cas de collision, des occupants d'un véhicule automobile au moyen d'un coussin de protection gonflé par des gaz provenant d'un générateur pyrotechnique de gaz. Plus précisément, l'invention concerne un générateur pyrotechnique de gaz chauds, utile pour gonfler aussi bien un coussin frontal qu'un coussin latéral de protection des occupants d'un véhicule automobile.

Il a ainsi été proposé de protéger, en cas de chocs frontaux, les occupants, conducteur et passagers, d'un véhicule automobile au moyen de coussins gonflables disposés devant eux. Les brevets FR 2 116 948 et FR 2 116 949, correspondant aux brevets US-A 3 882 673 et US-A 3 813 007, ont décrit des générateurs pyrotechniques de gaz dont les gaz proviennent pour une partie de la combustion d'un chargement pyrotechnique de gaz et pour une autre partie de la vaporisation d'un liquide contenu dans une enceinte placée à proximité dudit chargement pyrotechnique. Mais, de tels générateurs ont une structure relativement complexe qui leur confère un prix de revient élevé. L'homme du métier s'est alors tourné vers des générateurs dont l'intégralité des gaz provenait de la combustion d'un chargement solide. Ainsi, le brevet américain US-A 5 160 163 propose un générateur pyrotechnique de gaz, de forme générale cylindrique, plus spécialement conçu pour la protection d'un conducteur d'un véhicule automobile, et le brevet européen EP 404 572 qui forme l'état de la technique le plus proche propose un générateur pyrotechnique de gaz de forme générale cylindrique allongée, plus spécialement conçu pour la protection du passager situé à l'avant d'un véhicule automobile. Mais, ces deux générateurs ont chacun une configuration mécanique complexe entraînant donc un coût de fabrication relativement élevé. De plus, ils ne peuvent pas être utilisés pour gonfler des coussins latéraux de protection.

Plus récemment, l'homme du métier s'est intéressé au problème de la protection par coussin gonflable des occupants d'un véhicule automobile en cas de chocs latéraux et non plus frontaux. Ce problème et sa solution au moyen de coussins latéraux disposés dans le dossier des sièges du véhicule est évoqué, par exemple, dans le brevet américain US-A 5 112 079. Depuis, il s'est malheureusement avéré que les générateurs pyrotechniques traditionnels pour coussins frontaux ne conviennent absolument pas pour assurer un gonflage correct et fiable des coussins latéraux de protection. En effet si, pour être fiable, un coussin de protection frontal doit pouvoir être gonflé dans un laps de temps voisin de 50 millisecondes après la détection de l'impact et nécessite donc un chargement pyrotechnique qui brûle complètement dans ce laps de temps, un coussin latéral de protection doit pouvoir être gonflé dans un laps de temps voisin de 10 millisecondes après la détection de l'impact. Or l'homme du métier ne dispose pas, avec les solutions connues jusqu'à présent pour les coussins frontaux, d'un générateur et d'un chargement pyrotechnique qui garantissent une combustion complète dans un laps de temps de 10 millisecondes. En effet, les générateurs avec réservoir de liquide ou les générateurs dans lesquels le chargement est sous forme de bloc plein ont intrinsèquement des temps de réponse trop longs. Les générateurs dont le chargement est constitué par un fagot de brins creux de poudre génératrice de gaz ne permettent pas de garantir, dans les conditions de pression et de température requises pour une combustion aussi rapide, la tenue mécanique du fagot et donc la fiabilité de la réponse du générateur. Enfin, les générateurs dans lesquels la composition pyrotechnique est sous forme de grains de poudre ou de pastilles ne permettent pas de maîtriser la loi de combustion et, avec ce type de solutions, l'homme de métier n'est pas à l'abri de risques d'explosion du générateur.

L'homme du métier est donc à la recherche de générateurs pyrotechniques de gaz à faibles coûts de fabrication garantissant un gonflement fiable aussi bien des coussins frontaux que des coussins latéraux de protection des occupants d'un véhicule automobile.

L'objet de la présente invention est d'une part, de proposer un générateur pyrotechnique de gaz dont la fabrication est aisée et d'un coût peu élevé qui garantisse, selon la géométrie du chargement pyrotechnique employée, soit une loi de combustion complète dans un temps de l'ordre de 50 millisecondes lors de chocs frontaux, soit une loi de combustion complète dans un temps de l'ordre de 10 millisecondes lors de choc latéraux, et d'autre part, de proposer son procédé de fabrication.

L'invention concerne donc un générateur pyrotechnique de gaz chauds, destiné à la sécurité automobile, comportant notamment un tube cylindrique qui présente une paroi latérale dont la longueur des génératrices est au moins deux fois supérieure à son diamètre extérieur, un inflammateur et un chargement pyrotechnique, caractérisé en ce que,
**i)** ledit tube cylindrique est en métal, ce métal étant suffisamment ductile pour pouvoir être serti, ce tube comportant une partie amont continue et une partie aval munie de trous, et présentant une extrémité ouverte amont et une extrémité ouverte aval,
**ii)** une tuyère interne est constituée par une pièce cylindrique présentant un orifice central initialement obturé, cette pièce étant fixée par sertissage dans la paroi latérale à la jonction de la partie amont et de la partie aval du tube,
**iii)** ledit chargement pyrotechnique est disposé dans la partie amont et isolé de la paroi latérale continue du tube par une enveloppe cylindrique,
**iv)** ledit inflammateur est inséré dans un porte-inflammateur fixé dans l'extrémité ouverte amont du tube,
**v)** un bouchon étanche est fixé dans l'extrémité ouverte aval du tube.

Préférentiellement, le métal constituant le tube cylindrique présente une capacité d'allongement supérieure à 20% de sa longueur et une résistance à la rupture en traction supérieure à 400 MPa.

Plus particulièrement, la partie aval du tube constitue un diffuseur compris entre la tuyère obturée et le bouchon étanche fixé dans l'extrémité ouverte aval.

Préférentiellement, l'orifice central de la tuyère interne est obturé par un opercule claquable.

Avantageusement, une grille de filtration et d'appui du chargement pyrotechnique est placée entre l'enveloppe cylindrique et la tuyère interne.

Avantageusement encore, une bague de calage est placée entre le porte-inflammateur et l'enveloppe cylindrique de manière à caler ladite enveloppe contre la grille de filtration. Cette bague peut également, en cas de besoin, remplir une fonction de compensateur de volume.

Selon un premier mode de réalisation préféré, le chargement pyrotechnique est constitué par une composition pyrotechnique choisie dans le groupe constitué par les compositions à base de nitrocellulose et de nitroglycérine. Préférentiellement, la composition comprend au moins 30% de nitroglycérine en poids dans le mélange de nitrocellulose et de nitroglycérine.

Selon un second mode de réalisation préféré, le chargement pyrotechnique est constitué par une composition pyrotechnique composite à base d'un liant organique et d'au moins une charge oxydante. Parmi celles-ci, deux compositions sont particulièrement préférées :
- une première, comprenant essentiellement une résine silicone comme liant et un mélange de perchlorate d'ammonium et de nitrate de sodium comme charge oxydante, qui est par exemple décrite dans la demande de brevet FR-A-2 728 562,
- une seconde, comprenant un liant thermoplastique et une charge oxydante à base de nitrate d'ammonium, qui est par exemple proposée dans la demande de brevet FR-A-2 713 632.

Selon un mode particulier de réalisation, le chargement pyrotechnique est sous la forme d'un bloc perforé par une pluralité de canaux parallèles à l'axe dudit bloc contenu dans l'enveloppe, elle-même disposée entre la bague de calage et la grille de filtration, de manière à ce que lesdits canaux soient parallèles à l'axe de révolution du tube.

Préférentiellement, le bloc de chargement pyrotechnique présente des épaisseurs radiales à brûler toutes identiques, avec une géométrie permettant un allumage simultané par les surfaces internes desdits canaux et par la surface latérale externe du bloc.

Avantageusement, dans un même plan transversal au bloc, les centres des canaux périphériques du bloc ne sont pas tous équidistants du centre dudit bloc mais se répartissent alternativement, dans ce plan, sur deux cercles concentriques distincts.

Préférentiellement encore, lesdits canaux sont des canaux cylindriques.

L'invention concerne également un procédé de fabrication d'un tel générateur pyrotechnique de gaz chauds, procédé caractérisé en ce que,
**i)** dans une première étape, on constitue un tube cylindrique, dans un métal suffisamment ductile pour pouvoir être serti, ce tube comportant une partie amont continue, une partie aval munie de trous, une extrémité ouverte amont et une extrémité ouverte aval, et présentant une paroi latérale dont la longueur des génératrices est au moins deux fois supérieure à son diamètre extérieur,
**ii)** dans une deuxième étape, une tuyère interne constituée par une pièce cylindrique présentant un orifice central est introduite par l'une des extrémités ouvertes dudit tube,
**iii)** dans une troisième étape, la tuyère est fixée par sertissage dans la paroi latérale du tube, à la jonction de la partie amont et de la partie aval du tube,
**iv)** dans une quatrième étape, une enveloppe cylindrique contenant le chargement pyrotechnique ainsi que la bague de calage et la grille de filtration sont introduits dans le tube par l'extrémité ouverte amont,
**v)** dans une cinquième étape, un inflammateur inséré dans un porte-inflammateur est introduit par l'extrémité ouverte amont, ledit porte-inflammateur venant en butée contre la bague de calage et étant fixé dans l'extrémité ouverte amont dudit tube.

Préférentiellement, un bouchon étanche est fixé dans l'extrémité ouverte aval du tube.

Selon le cas, ladite enveloppe cylindrique est :
- soit une enveloppe tubulaire ne contenant que le chargement pyrotechnique, la bague de calage étant plaquée contre une extrémité ouverte de ladite enveloppe tubulaire et la grille de filtration étant plaquée contre l'autre extrémité ouverte, la tuyère étant alors obturée par un opercule claquable,
- soit un boîtier cylindrique contenant le chargement pyrotechnique ainsi que la bague de calage et la grille de filtration, ledit boîtier comportant une extrémité fermée plaquée contre la tuyère et faisant office d'opercule claquable.

Préférentiellement, la fixation du porte-inflammateur dans l'extrémité ouverte amont du tube est réalisée par sertissage.

Préférentiellement encore, la fixation du bouchon étanche dans l'extrémité ouverte aval du tube est réalisée par sertissage.

Un générateur selon l'invention présente donc les deux avantages suivants :
- d'une part, le métal choisi pour constituer le tube cylindrique autorise un procédé de fabrication qui ne met en oeuvre qu'un faible nombre de pièces, ce qui permet de réduire très sensiblement les coûts de fabrication d'un générateur selon l'invention tout en garantissant un gonflage correct et fiable du coussin de protection des occupants d'un véhicule automobile,
- d'autre part, ce générateur est susceptible d'être employé dans toutes les configurations possibles, c'est-à-dire aussi bien dans la configuration "conducteur" que dans la configuration "passager", et il peut servir à gonfler, selon la géométrie du chargement pyrotechnique utilisée, soit un coussin frontal de protection, soit un coussin latéral de protection des occupants d'un véhicule automobile.

On donne ci-après une description détaillée du mode préféré de réalisation de l'invention en se référant aux figures 1 à 3.

La figure **1** est une coupe longitudinale d'un générateur selon l'invention utilisé pour gonfler un coussin latéral de protection.

La figure **2** est une vue de face d'un bloc constituant le chargement pyrotechnique du générateur représenté à la figure 1.

La figure **3** est une vue en perspective, partiellement éclatée, selon un plan de la coupe brisée III-III du bloc représenté à la figure 2.

La figure **4** est une coupe longitudinale d'un générateur selon l'invention utilisé pour gonfler un coussin frontal de protection.

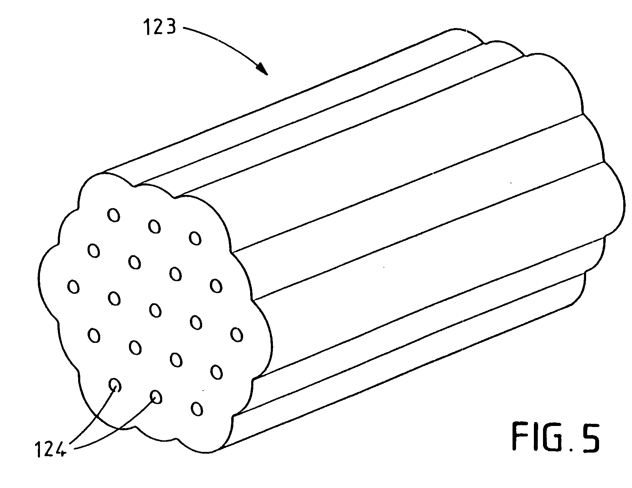

La figure **5** est une vue en perspective d'un bloc constituant le chargement pyrotechnique du générateur représenté à la figure 4.

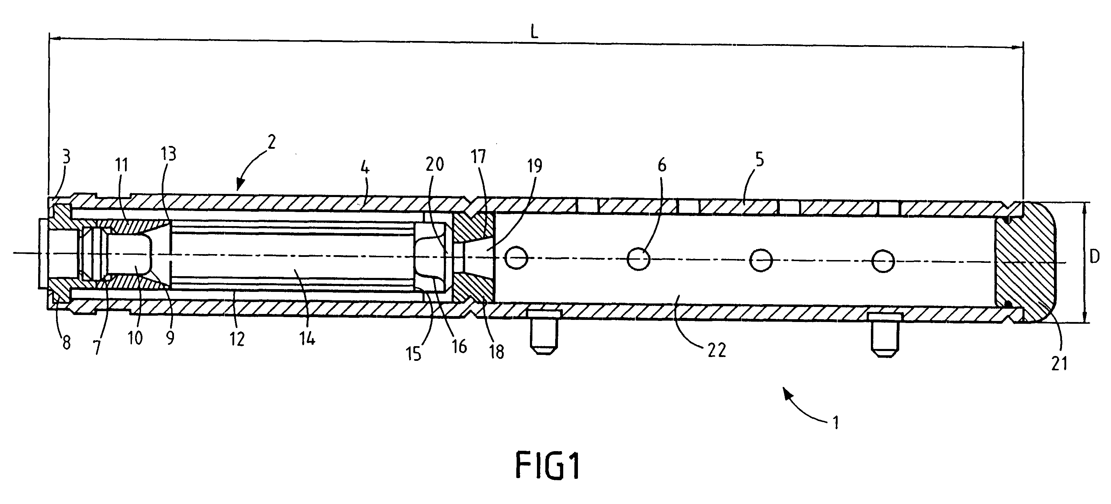

En se reportant plus particulièrement à la figure 1, nous observons qu'un générateur pyrotechnique de gaz chauds 1 selon l'invention utilisé pour gonfler un coussin latéral de protection comporte un tube cylindrique 2 constitué dans un métal suffisamment ductile pour pouvoir être serti, c'est-à-dire que le métal doit présenter préférentiellement une capacité d'allongement supérieure à 20% de sa longueur et une résistance à la rupture en traction supérieure à 400 MPa. Ce tube 2 présente deux ouvertures disposées chacune à une de ses extrémités amont et aval et est constitué par une paroi latérale 3 qui comporte une partie amont continue 4 et une partie aval 5 munie de trous 6. La longueur **L** des génératrices de ladite paroi latérale 3 qui doit être au moins deux fois supérieure à son diamètre extérieur **D**, est dans l'exemple représenté à la figure 1 sensiblement égale à huit fois ce diamètre **D**. Un inflammateur 7 est porté par un porte-inflammateur 8 qui est fixé par sertissage dans l'extrémité ouverte amont du tube 2. L'inflammateur 7 7 peut être un inflammateur à percussion ou un inflammateur électrique comme représenté sur les figures. L'inflammateur 7 est entouré par un capuchon métallique fragmentable 9 contenant une poudre d'allumage 10, comme par exemple une poudre du type bore/nitrate de potassium. Une bague de calage 11 en aluminium est interposée entre le porte-inflammateur 8 et une enveloppe tubulaire 12 cylindrique en aluminium, ladite bague 11 étant en appui contre une extrémité 13 de l'enveloppe tubulaire 12. Cette enveloppe tubulaire 12 contient un chargement pyrotechnique 14 et son autre extrémité 15 est plaquée contre une grille de filtration 16 en forme de cuvette cylindrique, elle-même en butée contre un tuyère interne 17. Cette tuyère interne 17 est constituée par une pièce 18 cylindrique en acier inoxydable présentant un orifice central 19 fermé par un opercule claquable 20. La tuyère 17 est fixée par sertissage dans la paroi latérale 3 à la jonction de la partie amont 4 et de la partie aval 5 du tube 2. Un bouchon étanche 21 est serti dans l'extrémité ouverte aval du tube 2, et permet de constituer un diffuseur 22 à l'aide de la tuyère 17 operculée et de la partie aval 5 munie de trous 6. Le chargement pyrotechnique 14 est choisi préférentiellement soit parmi les compositions dites "à double base" comprenant au moins 30% de nitroglycérine en poids dans le mélange de nitroglycérine et de nitrocellulose, soit parmi les deux types de compositions pyrotechniques composites suivantes :
- les compositions comprenant essentiellement une résine silicone comme liant et un mélange de perchlorate d'ammonium et de nitrate de sodium comme charge oxydante,
- les compositions comprenant un liant thermoplastique et une charge oxydante à base de nitrate d'ammonium.

Les compositions dites "à double base" présentent un inconvénient qui consiste en ce qu'elles se détériorent au cours du temps au contact d'un matériau comportant du fer. Pour cette raison, le chargement pyrotechnique 14 est contenu dans une enveloppe tubulaire 12 cylindrique en aluminium dont les extrémités ouvertes 13 et 15 viennent en appui d'un côté contre la bague de calage 11 et de l'autre contre la grille de filtration 16. Tout contact direct entre d'une part le tube 2, la bague de calage 11, la grille de filtration 16 et la composition pyrotechnique d'autre part, est alors évité, assurant par là-même une combustion correcte et fiable du chargement pyrotechnique 14.

En revanche, lorsque le chargement pyrotechnique 14 est sous la forme d'une composition pyrotechnique composite, l'enveloppe tubulaire 12 cylindrique en aluminium qui contient ledit chargement pyrotechnique 14 permet de maintenir une pression suffisante dans la partie amont 4 pour garantir l'allumage et la combustion complète du chargement pyrotechnique 14.

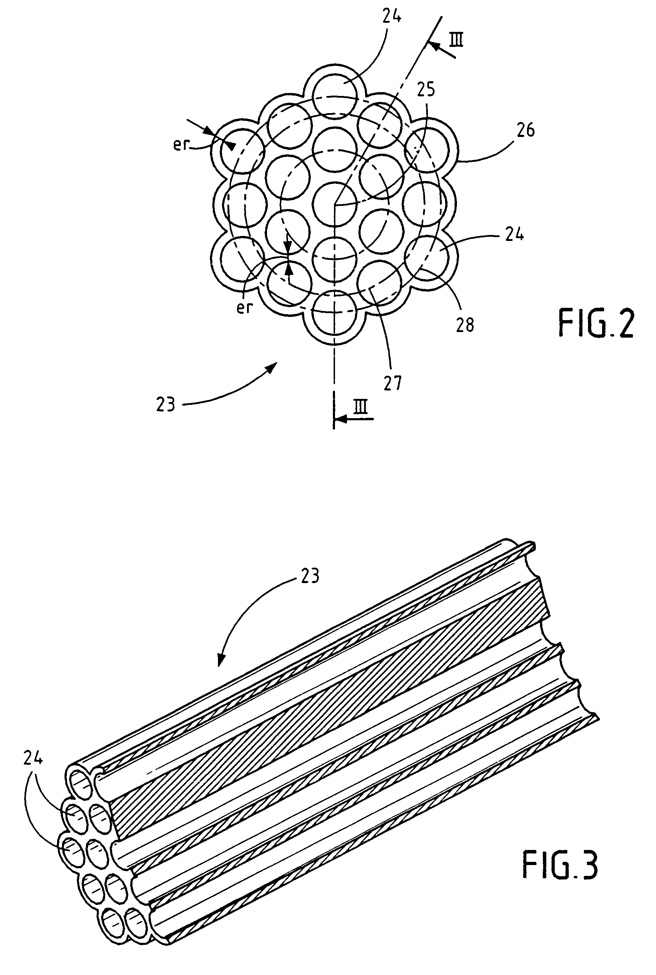

L'utilisation d'un générateur selon l'invention pour gonfler un coussin latéral de protection nécessite une géométrie particulière du chargement pyrotechnique 14. En se reportant plus particulièrement aux figures 2 et 3, nous observons que le chargement 14 se présente sous la forme d'un bloc 23 perforé par une pluralité de canaux 24 parallèles à l'axe 25 dudit bloc 23 contenu dans l'enveloppe tubulaire 12, dont les extrémités ouvertes 13 et 15 sont en appui respectivement contre la bague de calage 11 et la grille de filtration 16, de manière à ce que lesdits canaux 24 soient parallèles à l'axe de révolution du tube 2. Afin de garantir une fiabilité complète de la loi de combustion, le bloc 23 de chargement pyrotechnique présente des épaisseurs radiales "eᵣ " à brûler toutes identiques avec une géométrie permettant un allumage simultané par les surfaces internes desdits canaux 24 et par la surface latérale externe 26 du bloc 23. Préférentiellement, en se situant dans un plan transversal au bloc 23, les centres des canaux périphériques ne sont pas tous équidistants du centre 25 dudit bloc 23, mais se répartissent alternativement, dans ce plan, sur deux cercles 27 et 28 concentriques mais distincts. Préférentiellement encore, lesdits canaux 24 sont des canaux cylindriques.

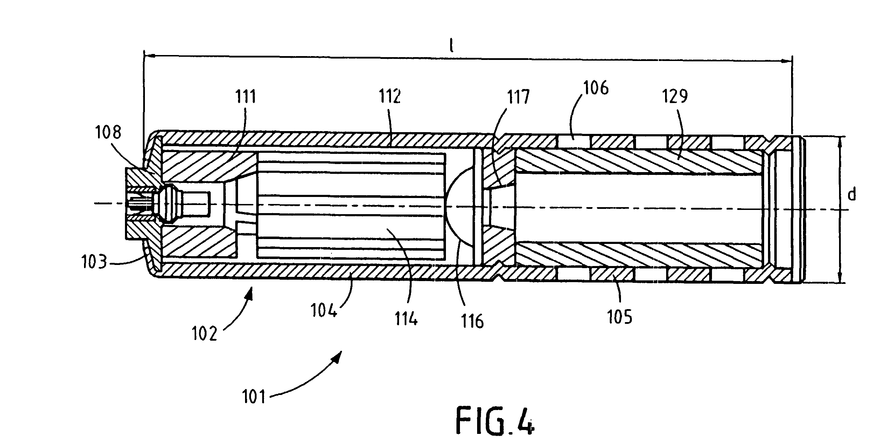

En se reportant plus particulièrement à la figure 4, nous observons qu'un générateur pyrotechnique de gaz chauds 101 selon l'invention utilisé pour gonfler un coussin frontal de protection comporte d'importantes similitudes avec le générateur 1 précédemment décrit. Néanmoins, une réalisation préférée de ce générateur 101 consiste en ce que la longueur **l** des génératrices de la paroi latérale 103 est sensiblement égale à quatre fois et demi le diamètre **d**. En outre, dans la présente réalisation, un boîtier 112 cylindrique, solidarisé au porte-inflammateur 108, enserre la bague de calage 111, le chargement pyrotechnique 114, ainsi que la grille de filtration 116. Ainsi, le boîtier 112 cylindrique correspond à la fusion de l'enveloppe 12 tubulaire et de l'opercule claquable 20 du générateur 1, puisque, d'une part, il isole de manière étanche le chargement pyrotechnique 114 de la paroi latérale 103, et, d'autre part, il obture la tuyère 117. La bague de calage 111 en aluminium est crantée et vient donc en appui directement contre le chargement pyrotechnique 114, ce dernier étant plaqué contre la grille de filtration 116 convexe par rapport audit chargement pyrotechnique 114. Avantageusement, un condenseur 129 cylindrique poreux, par exemple réalisé à l'aide d'un enroulement de grilles, est plaqué contre la partie aval 105 du tube 102. Enfin, le chargement pyrotechnique est choisi parmi les compositions dites "à double base" ou encore parmi les compositions pyrotechniques composites à base d'un liant organique et d'au moins une charge oxydante, et se présente sous la forme d'un bloc 123 perforé sur toute sa longueur par des canaux 124 cylindriques parallèles à l'axe de révolution du générateur 101. Ce bloc 123 a une géométrie à dix-neuf canaux 124 permettant, dans un volume donné, la présence d'une quantité de matière pyrotechnique plus importante que dans la géométrie précédemment décrite.

Le fonctionnement du générateur 1 selon l'invention est le suivant. En cas de collision, un signal émis par un détecteur de collision provoque la mise à feu de l'inflammateur 7 qui allume la poudre d'allumage 10. Les gaz de combustion de la poudre 10 provoquent l'éclatement du capuchon 9 et viennent au contact du chargement pyrotechnique 14 entraînant ainsi l'allumage du chargement 14. Lorsque la pression dans la partie amont 4 du tube 2 atteint la valeur de rupture de l'opercule 20, ce dernier se rompt et les gaz pénètrent dans le diffuseur 22 et s'échappent par les trous 6 de la partie aval 5 du tube 2 pour gonfler le coussin latéral de protection. Le fonctionnement d'un générateur selon l'invention utilisé pour gonfler un coussin latéral de protection implique que les gaz de combustion de la poudre 10 qui provoquent l'éclatement du capuchon 9 entourent la surface latérale externe 26 du bloc 23 ainsi que les surfaces internes des canaux 24 et entraînent ainsi l'allumage du bloc 23 sur toutes les surfaces de contact, et cela sur toute la longueur du bloc 23. Dans la mesure où l'épaisseur à brûler "eᵣ "a été déterminée dans ce but en fonction de la vitesse de combustion de la composition constituant le bloc 23, il est ainsi possible d'assurer la combustion complète du bloc 23 en moins de 10 millisecondes sans risque d'explosion.

Le fonctionnement du générateur 101 selon l'invention est analogue. Lorsque la pression dans la partie amont 104 du tube 101 atteint la valeur de rupture du boîtier 112 cylindrique qui obture la tuyère 117, ce dernier se rompt au voisinage de ladite tuyère 117 et les gaz pénètrent dans la partie aval 105 du tube 102, passent à travers le condenseur 129 poreux et s'échappent par les trous 106 pour gonfler le coussin frontal de protection.

Un avantage essentiel de la présente invention réside dans le fait que la fabrication d'un tel générateur pyrotechnique de gaz chauds 1 ou 101 est aisée et peu coûteuse. Pour ce faire, on procède comme suit en faisant référence, à titre d'exemple, au générateur 1.

Tout d'abord, on constitue le tube cylindrique 2 dans lequel on glisse la tuyère 17 par l'extrémité ouverte amont. Puis, la tuyère 17 est fixée par sertissage dans la paroi latérale 3, à la jonction de la partie amont 4 et de la partie aval 5 du tube 2. La grille de filtration 16 est alors introduite par l'extrémité ouverte amont et vient en appui contre la tuyère 17 operculée. Ensuite, l'enveloppe tubulaire 12 contenant le chargement pyrotechnique 14 est insérée dans le tube 2 par l'extrémité ouverte amont et son extrémité 15 vient en appui contre la grille de filtration 16. Puis, la bague de calage 11 est introduite dans le tube 2 par l'extrémité ouverte amont et est appliquée contre l'extrémité 13 de l'enveloppe tubulaire 12. L'inflammateur 7, qui est inséré dans le porte-inflammateur 8, est alors glissé par l'extrémité ouverte amont dans le tube 2, et ledit porte-inflammateur 8 qui vient en butée contre la bague de calage 11 est fixé par sertissage dans l'extrémité ouverte amont du tube 2. Enfin, le bouchon étanche 21 est fixé par sertissage dans l'extrémité ouverte aval du tube 2.

Donc, à l'issue de ces étapes, un générateur pyrotechnique de gaz chauds 1 selon l'invention est constitué et peut servir à gonfler un coussin latéral de protection des occupants d'un véhicule automobile.

## Revendications

1. Générateur pyrotechnique de gaz chauds (1,101), destiné à la sécurité automobile, comportant notamment un tube cylindrique (2,102) qui présente une paroi latérale (3,103) dont la longueur (L,l) des génératrices est au moins deux fois supérieure à son diamètre extérieur (D,d), un inflammateur (7) et un chargement pyrotechnique (14,114), **caractérisé en ce que**,
**i)** ledit tube cylindrique (2,102) est en métal, ce métal étant suffisamment ductile pour pouvoir être serti, ce tube (2,102) comportant une partie amont continue (4,104) et une partie aval (5,105) munie de trous (6,106), et présentant une extrémité ouverte amont et une extrémité ouverte aval,
**ii)** une tuyère interne (17,117) est constituée par une pièce cylindrique (18) présentant un orifice central (19) initialement obturé, cette pièce (18) étant fixée par sertissage dans la paroi latérale (3,103) à la jonction de la partie amont (4,104) et de la partie aval (5,105) du tube (2,102),
**iii)** ledit chargement pyrotechnique (14,114) est disposé dans la partie amont (4,104) et isolé de la paroi latérale continue par une enveloppe cylindrique (12,112),
**iv)** ledit inflammateur (7) est inséré dans un porte-inflammateur (8,108) fixé dans l'extrémité ouverte amont du tube (2,102),
**v)** un bouchon étanche (21) est fixé dans l'extrémité ouverte aval du tube (2,102).

2. Générateur selon la revendication 1, **caractérisé en ce que** le métal constituant le tube (2) présente une capacité d'allongement supérieure à 20% de sa longueur et une résistance à la rupture en traction supérieure à 400 MPa.

3. Générateur selon l'une quelconque des revendications 1 ou 2, **caractérisé en ce que** la partie aval (5) du tube (2) constitue un diffuseur (22) compris entre la tuyère (17) obturée et le bouchon étanche (21) fixé dans l'extrémité ouverte aval.

4. Générateur selon l'une quelconque des revendications 1 à 3, **caractérisé en ce que** l'orifice central (19) de la tuyère interne (17) est obturé par un opercule claquable (20).

5. Générateur selon l'une quelconque des revendications 1 à 4, **caractérisé en ce qu'**une grille de filtration et d'appui (16) du chargement pyrotechnique (14) est placée entre l'enveloppe cylindrique (12) et la tuyère interne (17).

6. Générateur selon l'une quelconque des revendications 1 à 5, **caractérisé en ce qu'**une bague de calage (11) est placée entre le porte-inflammateur (8) et l'enveloppe cylindrique (12) de manière à caler ladite enveloppe (12) contre la grille de filtration (16).

7. Générateur selon l'une quelconque des revendications 1 à 6, **caractérisé en ce que** le chargement pyrotechnique (14) est constitué par une composition pyrotechnique qui comprend au moins 30% de nitroglycérine en poids dans un mélange de nitrocellulose et de nitroglycérine.

8. Générateur selon l'une quelconque des revendications 1 à 6, **caractérisé en ce que** le chargement pyrotechnique (14) est constitué par une composition pyrotechnique composite qui comprend essentiellement une résine silicone comme liant et un mélange de perchlorate d'ammonium et de nitrate de sodium comme charge oxydante.

9. Générateur selon l'une quelconque des revendications 1 à 6, **caractérisé en ce que** le chargement pyrotechnique (14) est constitué par une composition pyrotechnique composite qui comprend un liant thermoplastique et une charge oxydante à base de nitrate d'ammonium.

10. Générateur selon l'une quelconque des revendications 7 à 9, **caractérisé en ce que** ledit chargement pyrotechnique (14) est sous la forme d'un bloc (23) perforé par une pluralité de canaux (24) parallèles à l'axe (25) dudit bloc (23) contenu dans l'enveloppe (12), elle-même disposée entre la bague de calage (11) et la grille de filtration (16), de manière à ce que lesdits canaux (24) soient parallèles à l'axe de révolution du tube (2).

11. Générateur selon la revendication 10, **caractérisé en ce que** le bloc (23) de chargement pyrotechnique (14) présente des épaisseurs radiales (eᵣ) à brûler toutes identiques, avec une géométrie permettant un allumage simultané par les surfaces internes desdits canaux (24) et par la surface latérale externe (26) du bloc (23).

12. Générateur selon la revendication 11, **caractérisé en ce que**, dans un même plan transversal, les centres des canaux périphériques du bloc (23) ne sont pas tous équidistants du centre (25) dudit bloc (23) mais se répartissent alternativement, dans ce plan, sur deux cercles (27,28) concentriques distincts.

13. Procédé de fabrication d'un générateur selon l'une quelconque des revendications 1 à 12, **caractérisé en ce que**,
**i)** dans une première étape, on constitue un tube cylindrique (2,102), dans un métal suffisamment ductile pour pouvoir être serti, ce tube (2,102) comportant une partie amont continue (4,104), une partie aval (5,105) munie de trous (6,106), une extrémité ouverte amont et une extrémité ouverte aval, et présentant une paroi latérale (3,103) dont la longueur des génératrices (L,1) est au moins deux fois supérieure à son diamètre extérieur (D,d),
**ii)** dans une deuxième étape, une tuyère interne (17,117) constituée par une pièce cylindrique (18) présentant un orifice central (19) est introduite par l'une des extrémités ouvertes dudit tube (2,102),
**iii)** dans une troisième étape, la tuyère (17,117) est fixée par sertissage dans la paroi latérale (3,103) du tube (2,102), à la jonction de la partie amont (4,104) et de la partie aval (5,105) du tube (2,102),
**iv)** dans une quatrième étape, une enveloppe (12,112) cylindrique contenant le chargement pyrotechnique (14,114) ainsi qu'une bague de calage (11,111) et une grille de filtration (16,116) sont introduits dans le tube (2,102) par l'extrémité ouverte amont,
**v)** dans une cinquième étape, un inflammateur (7) inséré dans un porte-inflammateur (8,108) est introduit par l'extrémité ouverte amont, ledit porte-inflammateur (8,108) venant en butée contre la bague de calage (11,111) et étant fixé dans l'extrémité ouverte amont dudit tube (2,102).

## Claims

1. Hot gas pyrotechnic generator (1, 101) designed for automobile safety, comprising in particular a cylindrical tube (2, 102) which has a lateral wall (3, 103), the length (L, l) of the generatrices of which is at least twice its outer diameter (D, d), an igniter (7) and a pyrotechnic charge (14, 114), **characterised in that**:
i) the said cylindrical tube (2, 102) is made of metal, this metal being sufficiently ductile to be able to be crimped, this tube (2, 102) comprising a continuous upstream part (4, 104) and a downstream part (5, 105) provided with holes (6, 106), and having an open upstream end and an open downstream end;
ii) an inner pipe (17, 117) consists of a cylindrical part (18) with a central aperture (19) which is initially closed, this part (18) being secured by being crimped in the lateral wall (3, 103), at the junction of the upstream part (4, 104) and of the downstream part (5, 105) of the tube (2, 102);
iii) the said pyrotechnic charge (14, 114) is disposed in the upstream part (4, 104) and is isolated from the continuous lateral wall by a cylindrical envelope (12, 112);
iv) the said igniter (7) is inserted in an igniter-holder (8, 108), which is secured in the open upstream end of the tube (2, 102); and
v) a sealed stopper (21) is secured in the open downstream end of the tube (2, 102).

2. Generator according to claim 1, **characterised in that** the metal which constitutes the tube (2) has an elongation capacity which is greater than 20% of its length, and tensile strength which is greater than 400 MPa.

3. Generator according to claim 1 or claim 2, **characterised in that** the upstream part (5) of the tube (2) constitutes a diffuser (22), which is contained between the closed pipe (17) and the sealed stopper (21) which is secured in the open downstream end.

4. Generator according to any one of claims 1 to 3, **characterised in that** the central aperture (19) of the inner pipe (17) is closed by a cap (20) which can be punched through.

5. Generator according to any one of claims 1 to 4, **characterised in that** a grid (16) for filtering and support of the pyrotechnic charge (14) is placed between the cylindrical envelope (12) and the inner pipe (17).

6. Generator according to any one of claims 1 to 5, **characterised in that** a wedging ring (11) is placed between the igniter-holder (8) and the cylindrical envelope (12), such as to wedge the said envelope (12) against the filtering grid (16).

7. Generator according to any one of claims 1 to 6, **characterised in that** the pyrotechnic charge (14) consists of a pyrotechnic composition which comprises at least 30% by weight of nitroglycerine, in a mixture of nitrocellulose and nitroglycerine.

8. Generator according to any one of claims 1 to 6, **characterised in that** the pyrotechnic charge (14) consists of a composite pyrotechnic composition which comprises substantially a silicone resin as a bonding agent, and a mixture of ammonium perchlorate and sodium nitrate as an oxidant charge.

9. Generator according to any one of claims 1 to 6, **characterised in that** the pyrotechnic charge (14) consists of a composite pyrotechnic composition which comprises a thermoplastic bonding agent and an oxidant charge based on ammonium nitrate.

10. Generator according to any one of claims 7 to 9, **characterised in that** the said pyrotechnic charge (14) is in the form of a block (23), which is perforated by a plurality of channels (24) parallel to the axis (25) of the said block (23) contained in the envelope (12), which itself is disposed between the wedging ring (11) and the filtering grid (16), such that the said channels (24) are parallel to the axis of revolution of the tube (2).

11. Generator according to claim 10, **characterised in that** the block (23) of pyrotechnic charge (14) has radial thicknesses (eᵣ) to be burnt, which are all identical, with a geometry which permits simultaneous ignition by the inner surface of the said channels (24) and by the outer lateral surface (26) of the block (23).

12. Generator according to claim 11, **characterised in that**, in a single transverse plane, the centres of the peripheral channels of the block (23) are not all equidistant from the centre (25) of the said block (23), but are distributed alternately in two distinct concentric circles (27, 28) in this plane.

13. Method for production of a generator according to any one of claims 1 to 12, **characterised in that**:
i) in a first step, a cylindrical tube (2, 102) is constituted from a metal which is sufficiently ductile to be able to be crimped, this tube (2, 102) comprising a continuous upstream part (4, 104), a downstream part (5, 105) which is provided with holes (6, 106), an open upstream end and an open downstream end, and having a lateral wall (3, 103), the length of the generatrices (L, l) of which is at least twice its outer diameter (D, d);
ii) in a second step, an inner pipe (17, 117) constituted by a cylindrical part (18) which has a central aperture (19) is introduced via one of the open ends of the said tube (2, 102);
iii) in a third step, the pipe (17, 117) is secured by being crimped in the lateral wall (3, 103) of the tube (2, 102), at the junction of the upstream part (4, 104) and of the downstream part (5, 105) of the tube (2, 102);
iv) in a fourth step, a cylindrical envelope (12 112) which contains the pyrotechnic charge (14, 114), as well as a wedging ring (11, 111) and a filtering grid (16, 116), are introduced into the tube (2, 102) via the open upstream end; and
v) in a fifth step, an igniter (7) inserted in an igniter-holder (8, 108) is introduced via the open upstream end, the said igniter-holder (8, 108) abutting the wedging ring (11, 111), and being secured in the open upstream end of the said tube (2, 102).

## Patentansprüche

1. Pyrotechnischer Heißgas-Generator (1, 101) für die Fahrzeugsicherheit, der insbesondere ein zylindrisches Rohr (2, 102) mit einer Seitenwand (3, 103), deren äußere Länge (L, l) mindestens doppelt so groß ist wie sein Außendurchmesser (D, d), einen Zünder (7) und eine pyrotechnische Ladung (14, 114) aufweist, **dadurch gekennzeichnet, daß**
i) das zylindrische Rohr (2, 102) aus Metall ist, wobei dieses Metall ausreichend duktil ist, um gefalzt werden zu können, wobei dieses Rohr (2, 102) einen durchgehenden vorderen Bereich (4, 104) und einen mit Löchern (6, 106) versehenen hinteren Bereich (5, 105) aufweist und ein offenes vorderes Ende und ein offenes hinteres Ende besitzt,
ii) eine innere Düse (17, 117) aus einem zylindrischen Bauteil (18) besteht, das eine ursprünglich verschlossene, zentrale Öffnung (19) hat, wobei dieses Bauteil (18) durch Falzen in der Seitenwand (3, 103) an der Verbindungsstelle zwischen dem vorderen Bereich (4, 104) und dem hinteren Bereich (5, 105) des Rohrs (2, 102) befestigt ist,
iii) die pyrotechnische Ladung (14, 114) im vorderen Bereich (4, 104) angeordnet und durch eine zylindrische Hülle (12, 112) von der durchgehenden Seitenwand isoliert ist,
iv) der Zünder (7) in einen Zünderträger (8, 108) eingefügt ist, der im offenen vorderen Ende des Rohrs (2, 102) befestigt ist,
v) ein dichter Stopfen (21) im offenen hinteren Ende des Rohrs (2, 102) befestigt ist.

2. Generator nach Anspruch 1, **dadurch gekennzeichnet, daß** das das Rohr (2) bildende Metall eine Längsdehnungsfähigkeit, die mehr als 20% seiner Länge beträgt, und eine Reißfestigkeit in Zugrichtung von mehr als 400 MPa aufweist.

3. Generator nach einem der Ansprüche 1 oder 2, **dadurch gekennzeichnet, daß** der hintere Bereich (5) des Rohrs (2) einen Diffusor (22) bildet, der zwischen der verschlossenen Düse (17) und dem dichten Stopfen (21) liegt, der im offenen hinteren Ende befestigt ist.

4. Generator nach einem der Ansprüche 1 bis 3, **dadurch gekennzeichnet, daß** die zentrale Öffnung (19) der inneren Düse (17) von einer durchschlagbaren Abdeckung (20) verschlossen wird.

5. Generator nach einem der Ansprüche 1 bis 4, **dadurch gekennzeichnet, daß** ein Filtrier- und Stützgitter (16) der pyrotechnischen Ladung (14) zwischen der zylindrischen Hülle (12) und der inneren Düse (17) angeordnet ist.

6. Generator nach einem der Ansprüche 1 bis 5, **dadurch gekennzeichnet, daß** ein Klemmring (11) zwischen dem Zünderträger (8) und der zylindrischen Hülle (12) so angeordnet ist, daß er diese Hülle (12) gegen das Filtergitter (16) klemmt.

7. Generator nach einem der Ansprüche 1 bis 6, **dadurch gekennzeichnet, daß** die pyrotechnische Ladung (14) aus einer pyrotechnischen Zusammensetzung besteht, die mindestens 30 Gew.-% Nitroglycerin in einer Mischung von Nitrocellulose und Nitroglycerin enthält.

8. Generator nach einem der Ansprüche 1 bis 6, **dadurch gekennzeichnet, daß** die pyrotechnische Ladung (14) aus einer pyrotechnischen Verbundzusammensetzung besteht, die hauptsächlich ein Silikonharz als Bindemittel und eine Mischung aus Ammoniumperchlorat und Natriumnitrat als oxidierende Ladung enthält.

9. Generator nach einem der Ansprüche 1 bis 6, **dadurch gekennzeichnet, daß** die pyrotechnische Ladung (14) aus einer pyrotechnischen Verbundzusammensetzung besteht, die ein thermoplastisches Bindemittel und eine oxidierende Ladung auf der Basis von Ammoniumnitrat enthält.

10. Generator nach einem der Ansprüche 7 bis 9, **dadurch gekennzeichnet, daß** die pyrotechnische Ladung (14) in Form eines Blocks (23) vorliegt, der von mehreren Kanälen (24) parallel zur Achse (25) des Blocks (23) durchquert wird, der in der Hülle (12) enthalten ist, die selbst zwischen dem Klemmring (11) und dem Filtriergitter (16) so angeordnet ist, daß die Kanäle (24) parallel zur Drehachse des Rohrs (2) liegen.

11. Generator nach Anspruch 10, **dadurch gekennzeichnet, daß** der Block (23) der pyrotechnischen Ladung (14) zu verbrennende radiale Stärken (er) aufweist, die alle gleich sind, mit einer Geometrie, die ein gleichzeitiges Zünden über die Innenflächen der Kanäle (24) und die äußere Seitenwand (26) des Blocks (23) erlaubt.

12. Generator nach Anspruch 11, **dadurch gekennzeichnet, daß** in einer Querebene die Zentren der Umfangskanäle des Blocks (23) nicht alle den gleichen Abstand zur Mitte (25) des Blocks (23) aufweisen, sondern sich in dieser Ebene abwechselnd auf zwei unterschiedlichen konzentrischen Kreisen (27, 28) verteilen.

13. Verfahren zur Herstellung eines Generators nach einem der Ansprüche 1 bis 12, **dadurch gekennzeichnet, daß**
i) in einem ersten Schritt ein zylindrisches Rohr (2, 102) aus einem Metall hergestellt wird, das duktil genug ist, um gefalzt werden zu können, wobei dieses Rohr (2, 102) einen durchgehenden vorderen Bereich (4, 104), einen mit Löchern (6, 106) versehenen hinteren Bereich (5, 105), ein offenes vorderes Ende und ein offenes hinteres Ende aufweist und eine Seitenwand (3, 103) besitzt, deren äußere Länge (L, l) mindestens doppelt so groß ist wie sein Außendurchmesser (D, d),
ii) in einem zweiten Schritt eine innere Düse (17, 117), die aus einem zylindrischen Bauteil (18) mit einer zentralen Öffnung (19) besteht, über eines der offenen Enden des Rohrs (2, 102) eingeführt wird,
iii) in einem dritten Schritt die Düse (17, 117) durch Falzen in der Seitenwand (3, 103) des Rohrs (2, 102) an der Verbindungsstelle zwischen dem vorderen Bereich (4, 104) und dem hinteren Bereich (5, 105) des Rohrs (2, 102) befestigt wird,
iv) in einem vierten Schritt eine zylindrische Hülle (12, 112), die die pyrotechnische Ladung (14, 114) enthält, sowie ein Klemmring (11, 111) und ein Filtriergitter (16, 116) in das Rohr (2, 102) durch das offene vordere Ende eingeführt werden,
v) in einem fünften Schritt ein in einen Zünderträger (8, 108) eingesetzter Zünder (7) durch das offene vordere Ende eingeführt wird, wobei der Zünderträger (8, 108) gegen den Klemmring (11, 111) in Anschlag gelangt und im offenen vorderen Ende des Rohrs (2, 102) befestigt wird.
